Europäisches Patentamt

European Patent Office

Office européen des brevets

(19)

(11) Veröffentlichungsnummer : **0 013 926**
**B1**

(12) **EUROPÄISCHE PATENTSCHRIFT**

(45) Veröffentlichungstag der Patentschrift :
**11.11.81**

(51) Int. Cl.³ : **G 03 B 21/58**

(21) Anmeldenummer : **80100162.9**

(22) Anmeldetag : **14.01.80**

(54) **Lichtbildwand.**

(30) Priorität : **20.01.79 DE 7901492 U**

(43) Veröffentlichungstag der Anmeldung :
**06.08.80 (Patentblatt 80/16)**

(45) Bekanntmachung des Hinweises auf die Patenterteilung : **11.11.81 Patentblatt 81/45**

(84) Benannte Vertragsstaaten :
**DE FR GB IT NL SE**

(56) Entgegenhaltungen :
**US - A - 2 377 553**
**US - A - 2 787 320**

(73) Patentinhaber : **REFLECTA GMBH FOTO FILM PRO-JEKTION**
**Berlichingenstrasse 9**
**D-8540 Schwabach (DE)**

(72) Erfinder : **Weinberg, Ulli**
**An der Gredl 2**
**D-8542 Roth (DE)**

(74) Vertreter : **Louis, Dieter et al**
**LOUIS, PHLAU, LOHRENTZ & SEGETH Kesslerplatz 1**
**D-8500 Nürnberg (DE)**

Imprimerie Jouve, 17, rue du Louvre, 75001 Paris, France

## Lichtbildwand

Die Erfindung betrifft eine Lichtbildwand mit einem Stativ und einem über eine eine Verdrehung des Gehäuses zwischen einer horizontalen Gebrauchsstellung und einer zum Stativ parallelen, vertikalen Ruhestellung gestattenden Halterung mit dem Stativ verbundenen, die aufgerollte Lichtbildwand aufnehmenden Gehäuse, das mit einem in Gebrauchsstellung an der Oberseite des Gehäuses befindlichen Austrittsschlitz für die Lichtbildwand versehen ist, welche auf unterschiedlichen Seiten unterschiedliche Projektionsflächen aufweist, wobei die Halterung derart ausgebildet ist, dass das Gehäuse in zwei unterschiedliche horizontale Gebrauchsstellungen bringbar ist, in deren jeder der Austrittsschlitz oberseitig am Gehäuse angeordnet und die Lichtbildwand abhängig von der Gebrauchsstellung jeweils mit einer entsprechenden der Projektionsflächen vom Stativ weg weisend aus dem Gehäuse herausziehbar ist.

Eine derartige Lichtbildwand ist aus dem DE-GM 78 08 392 bekannt. Bei Lichtbildwänden mit zwei unterschiedlichen Projektionsflächen auf den verschiedenen Seiten des Tuches besteht dabei das Problem, das die aufgerollte Lichtbildwand aufnehmende Gehäuse in zwei unterschiedliche Gebrauchsstellungen gegenüber dem Stativ verbringen zu können, wobei in einer Gebrauchsstellung die eine Projektionsfläche der Lichtbildwand, in der anderen Gebrauchsstellung die zweite Projektionsfläche vom Stativ weg und damit zum Betrachter zeigt. Dieses Problem wird bei der bekannten Lichtbildwand durch eine Halterung gelöst, welche auf unterschiedlichen Seiten des Austrittsschlitzes liegende gehäusefeste Bereiche besitzt, die zum wahlweisen Eingriff mit einem stativfesten Gegenstück ausgebildet sind. Bei der ersten Ausführungsform wird dieser Grundgedanke dabei so verwirklicht, dass das Gehäuse für die Lichtbildwand lösbar über Haltelaschen mit dem Stativ verbunden ist. Ein derartiges Vorgehen hat zum einen den Nachteil relativ geringer Stabilität. Zum anderen ist die Handhabung dieser Lichtbildwand verständlicherweise relativ umständlich, da jeweils das Gehäuse entsprechend an dem Stativ festgelegt werden muss, wobei bei der bekannten Lichtbildwand ein Winkel in einen Schlitz eingeführt und ausserdem eine Schraubverbindung hergestellt werden muss.

Bei einer anderen, in dem DE-GM 78 08 392 beschriebenen Ausführungsform der Lichtbildwand wird das vorstehend erläuterte Problem durch die Verwendung einer das Gehäuse nahezu vollständig umgreifenden Kulissenführung gelöst, welche mit einem stativfesten Kulissenstein zusammenwirkt. Auch diese Ausführungsform ist mit Mängeln behaftet. Die Ausführungsform mit einer Kulissenführung und einem Kulissenstein ist aufwendig, wobei zudem die Gefahr besteht, dass der Kulissenstein bei unachtsamer Handhabung in der Kulissenführung hakt. Ausserdem ist bei dieser bekannten Lichtbildwand keine Arretierung vorgesehen, so dass die Stabilität zu wünschen übrig lässt.

Beiden bekannten Lichtbildwänden gemeinsam ist schliesslich der Nachteil, dass es der Geschicklichkeit und der Überlegung des Benutzers überlassen bleibt, das Gehäuse jeweils in die richtige Position zu bringen. Unachtsame Benutzer könnten unter Umständen das Gehäuse so ausrichten, dass der Austrittsschlitz nach unten weist, und dann die Lichtbildwand um die scharfe Kante des Austrittsschlitzes herum nach oben führen, in welchem Falle natürlich die Gefahr von Beschädigungen der Lichtbildwand bzw. des Tuches besteht.

Der Erfindung liegt nun die Aufgabe zugrunde, die bekannten Lichtbildwände dahingehend zu verbessern, dass das Gehäuse für die aufgerollte Lichtbildwand dann, wenn dieses Gehäuse aus der vertikalen Ruhestellung in eine horizontale Gebrauchsstellung gebracht wird, stets die richtige Position einnimmt, ohne dass der Benutzer relativ komplizierte Handgriffe ausführen müsste oder gar die Möglichkeit besteht, das Gehäuse in eine falsche, eventuell zu einer Beschädigung des Tuches führende Position zu bewegen.

Zur Lösung dieser Aufgabe wird nach der Erfindung vorgeschlagen, eine Lichtbildwand der eingangs erwähnten Art zo auszubilden, dass die Halterung aus zwei mittels eines eine Schwenkbewegung um eine zur Längsachse des Gehäuses parallele Schwenkachse gestattenden Gelenkes verbundenen Teilen besteht, deren erstes Teil mit dem Gehäuse an dessen dem Austrittsschlitz gegenüberliegender Seite fest verbunden ist und deren zweites Teil um eine quer zur Schwenkachse liegende Horizontalachse verdrehbar an dem Stativ gelagert ist, dass weiter der Austrittsschlitz des Gehäuses in dessen vertikaler Ruhestellung etwa in einer Vertikalebene mit der Längsachse des Gehäuses und des Stativs, diesem diametral gegenüberliegend, angeordnet ist, und dass schliesslich die beiden Teile der Halterung über ein bei Drehung des Gehäuses aus der vertikalen Ruhestellung in eine der beiden horizontalen Gebrauchsstellungen zwangsweise eine Schwenkbewegung des ersten Teils in eine Position, in der der Austrittsschlitz des Gehäuses nach oben weist, bewirkendes Getriebe bewegungsmässig miteinander gekoppelt sind.

Bei der Lichtbildwand gemäss der Erfindung ist also durch die spezielle Ausbildung der Halterung und das eine Zwangskopplung der Teile der Halterung und damit eine zwangsweise Bewegung des Gehäuses bei dessen Drehung gegenüber dem Stativ bewirkende Getriebe gewährleistet, dass das Gehäuse bei der normalerweise ohnehin durchgeführten Drehbewegung von der vertikalen Ruhestellung in die horizontale Gebrauchsstellung gleichzeitig die erforderliche Schwenkbewegung nach oben ausführt, so dass sich der Austrittsschlitz für die Lichtbildwand stets oben befindet. Abhängig von der Drehbewegung des Gehäuses gegenüber dem Stativ, nämlich im Uhrzeigersinn oder entgegen dem Uhrzeigersinn, wird ausserdem das Gehäuse in entsprechender Weise gedreht, um zu gewährleisten, dass jeweils die gewünschte der beiden Projektionsflächen vom Stativ weg und damit zum Betrachter gerichtet ist. Die Lichtbildwand gemäss der Erfindung kann also ohne grössere Schwierigkeiten auch von relativ ungeschickten Benutzern gehandhabt werden. Darüberhinaus ist die Gewähr gegeben, dass das Gehäuse nicht in eine Stellung verbracht werden kann, in der der Austrittsschlitz nach unten weist, so dass auch Beschädigungen der Lichtbildwand nicht zu befürchten sind.

Es sind selbstverständlich etliche Ausführungsformen für das Getriebe denkbar, beispielsweise wäre es möglich, ein Hebelgetriebe einzusetzen. Eine besonders einfache Ausführung erhält man jedoch dann, wenn das Getriebe von zwei miteinander kämmenden Zahnrädern gebildet ist, von denen das erste Zahnrad koaxial zur Schwenkachse des Gelenkes mit dem ersten Teil drehfest verbunden ist, während das zweite Zahnrad koaxial zur Horizontalachse angeordnet und gegenüber dem Stativ undrehbar befestigt ist, wobei jedoch eine Drehung des zweiten Teils gegenüber dem zweiten Zahnrad möglich ist. Die Zahnräder des Getriebes sind dabei vorteilhafterweise als Kegelzahnräder ausgebildet. Ein derartiges Zahnradgetriebe erfordert einerseits keinen erheblichen zusätzlichen Aufwand, andererseits ist es verhältnismässig stabil, erfüllt jedoch trotzdem die gestellten Anforderungen ohne Schwierigkeiten.

Bei Verwendung eines Zahnradgetriebes wird günstigerweise so vorgegangen, dass die Lagerachse für das erste Zahnrad gleichzeitig als Gelenkachse zur schwenkbaren Verbindung der beiden Teile der Halterung ausgebildet ist und die Lagerachse für das zweite Zahnrad gleichzeitig die Horizontalachse zur drehbaren Lagerung des zweiten Teils der Halterung am Stativ bildet, weil dann eine kompakte Bauweise möglich ist und die Zahl der erforderlichen Teile gering gehalten werden kann.

Die Teile der Halterung sind zweckmässig jeweils im wesentlichen U-förmig ausgebildet, im Bereich der freien Enden ihrer U-Schenkel mittels des Gelenkes um die zu den U-Stegen parallele Schwenkachse schwenkbar miteinander verbunden und über ihre U-Stege an dem Gehäuse bzw. dem Stativ festgelegt. Derart U-förmige Halterungsteile besitzen eine ausreichende stabilität und sind gleichzeitig einfach und damit mit geringen Kosten herstellbar.

Wenn das Gehäuse in jeder der Gebrauchsstellungen seitlich an dem Stativ oberhalb der Halterung anliegt, ergibt sich eine besonders stabile Lage der Lichtbildwand bzw. der Projektionsflächen während der Benutzung der Lichtbildwand.

Um eine Einstellung des Stativs auf unterschiedliche Projektionshöhen zu ermöglichen, können das zweite Teil der Halterung und gegebenenfalls das zweite Zahnrad an einem Griff befestigt sein, welcher in an sich bekannter Weise entlang des Stativs verschieblich ist.

Schliesslich liegt es im Rahmen der Erfindung, dass die beiden Projektionsflächen mit dunklen Berandungen jeweils unterschiedlichen Formates versehen sind. Beispielsweise könnte eine der Projektionsflächen einen quadratischen, dunklen Rand aufweisen, während die andere Projektionsfläche eine rechteckige Berandung entsprechend dem üblichen Schmalfilmformat tragen könnte. In diesem Falle würde die eine Projektionsfläche mit der quadratischen Berandung bei Projektion von Dias verwendet, während bei Projektion von Schmalfilmen die andere Projektionsfläche mit der rechteckigen Berandung zum Einsatz käme. Selbstverständlich könnten aber die Projektionsflächen auch in anderer Weise unterschiedlich ausgebildet sein, z.B. verschiedene Oberflächenstruktur aufweisen.

Weitere Merkmale, Einzelheiten und Vorteile der Erfindung ergeben sich aus der folgenden Beschreibung eines bevorzugten Ausführungsbeispieles einer Lichtbildwand anhand der Zeichnung.

In der Zeichnung stellen dar:

Figur 1    in Seitenansicht die Halterung sowie die für das Verständnis der Erfindung wesentlichen Teile des Gehäuses und des Stativs der Lichtbildwand in der Ruhestellung,

Figur 2a    eine Seitenansicht entsprechend Figur 1 in der ersten Gebrauchsstellung,

Figur 2b    eine Vorderansicht zu Figur 2a,

Figur 3a    eine Ansicht entsprechend Figur 2a, jedoch in der zweiten Gebrauchsstellung und

Figur 3b    eine Vorderansicht zu Figur 3a.

Die Lichtbildwand gemäss der Erfindung umfasst in an sich bekannter Weise ein von einem vertikalen Stab gebildetes Stativ 1, an dem ein Griff 2 vertikal verstellbar geführt ist. Zur Freigabe der Verrastung des Griffes 2 gegenüber dem Stativrohr 1 dient eine Taste 3.

Mit dem Griff 2 ist über eine Halterung 4 ein rohrförmiges Gehäuse 5 für die in an sich bekannter Weise auf- und abzuwickelnde Lichtbildwand 6 verbunden. Die Lichtbildwand 6 kann durch einen Austrittsschlitz 7 aus dem Gehäuse 5 herausgezogen werden. Sie wird dann mit ihrer Abschlussleiste 8, die normalerweise eine nicht gezeigte Öse oder dergleichen trägt, an einem am oberen Ende des Rohres 1 des Stativs vorhandenen Haken eingehängt, wozu es erforderlich ist, das Gehäuse 5 in eine horizontale Gebrauchsstellung zu verbringen in der ausserdem der Austrittsschlitz 7 nach oben weist.

Die Halterung 4 ist, wie dies an sich von Lichtbildwänden mit einem Stativ und in einem Gehäuse untergebrachter Leinwand her bekannt ist, um eine Horizontalachse 9 verdrehbar an dem Stativ 1 bzw. Griff 2 gelagert. Sie ist andererseits mittels Nieten 10 oder dergleichen fest mit dem Gehäuse verbunden, und zwar an dessen dem Austrittschlitz 7 gegenüberliegender Seite 11.

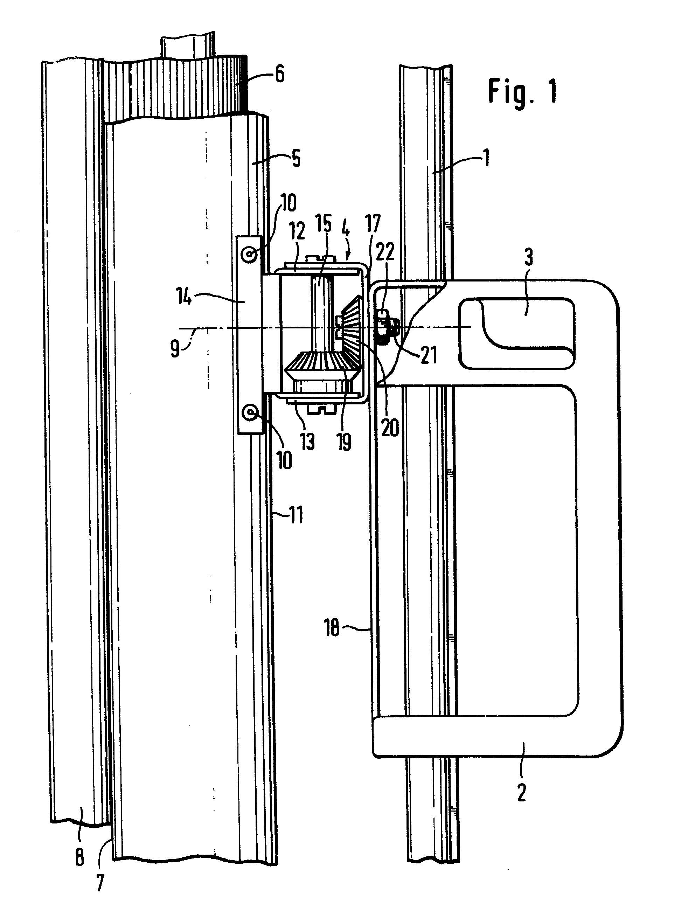

Die Besonderheit der gezeigten Lichtbildwand liegt in der speziellen Ausbildung der Halterung 4. Diese besteht nämlich aus zwei im Querschnitt etwa U-förmigen Teilen 12 und 13, wobei das erste Teil 12 über einen Ansatz 14 fest mit dem Gehäuse 5 verbunden ist, während das zweite Teil 13 um die Horizontalachse 9 gegenüber dem Griff 2 bzw. Stativ 1 verdrehbar ist. Die beiden Teile 12, 13 der Halterung 4 sind mittels einer ein Gelenk bildenden Schwenkachse 15 miteinander verbunden, wobei die Schwenkachse 15 jeweils die U-Schenkel 16 der Teile 12, 13 der Halterung 4 durchsetzt. Der Ansatz 14 bildet den U-Steg des ersten teils 12 der Halterung 4. Der U-Steg 17 des zweiten Teils 13 der Halterung 4 liegt drehbar der Fläche 18 des Griffes 2 an. Die beiden Teile 12, 13 der Halterung 4 sind weiterhin über ein Getriebe bewegungsmässig miteinander gekoppelt. Dieses Getriebe besteht aus einem ersten Kegel-Zahnrad 19 und einem zweiten Kegel-Zahnrad 20. Das erste Kegel-Zahnrad 19 sitzt auf der Schwenkachse 15 und ist drehfest mit dem entsprechenden U-Schenkel 16 des ersten Teils 12 verbunden. Das zweite Kegel-Zahnrad 20 ist mittels einer Achse 21 und einer Mutter 22 (Figur 1) so an der Wand 18 des Griffes 2 befestigt, dass das zweite Kegel-Zahnrad 20 nicht gedreht werden kann, jedoch die Achse 21 gleichzeitig die Horizontalachse 9 zur Drehung des zweiten Teils 13 der Halterung 4 gegenüber dem Griff 2 bzw. Stativ 1 bildet.

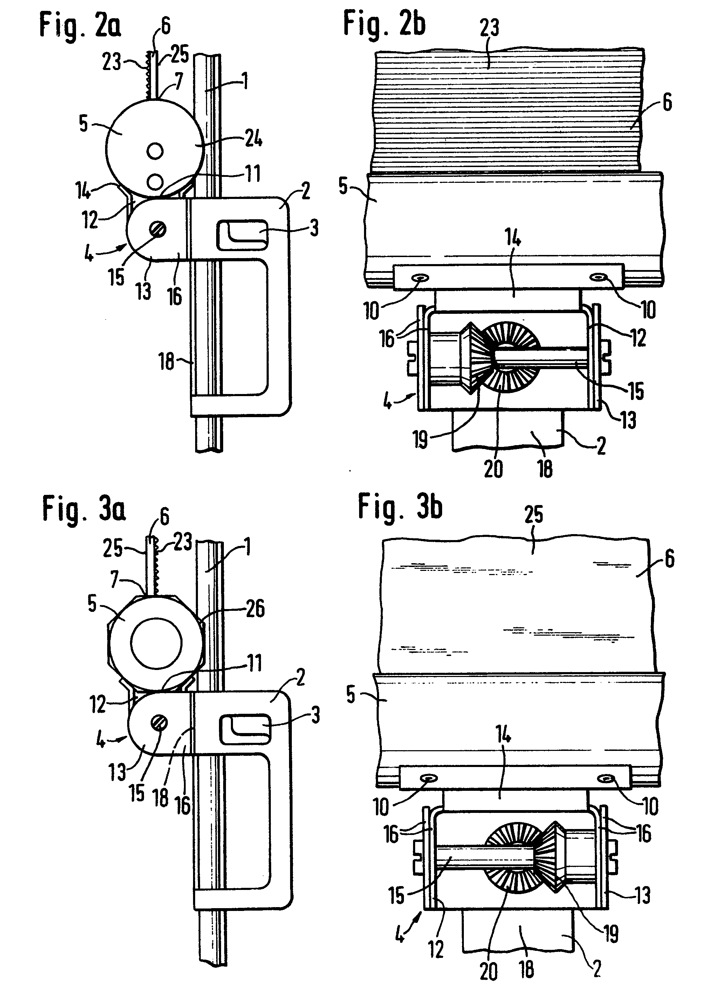

Wird nun das Gehäuse 5 mit der Lichtbildwand 6 gegenüber dem Stativ 1 im Uhrzeigersinn (von links in Figur 1 gesehen) gegenüber dem Griff 2 bzw. dem Stativ 1 aus der in Figur 1 gezeigten Ruhestellung in eine der Gebrauchsstellungen bewegt, so wälzen sich die miteinander kämmenden Zahnräder 19, 20 aneinander ab. Dies hat zur Folge, dass das erste Teil 12 der Halterung 4 und damit das Gehäuse 5 während dieser Drehbewegung des Gehäuses 5 gegenüber dem Stativ 1 gleichzeitig nach oben verschwenkt wird, und zwar in die aus den Figuren 2a und 2b ersichtliche Position, in der zum einen der Austrittsschlitz 7 des Gehäuses 5 nach oben zeigt, gleichzeitig aber das Gehäuse 5 und die Lichtbildwand 6 so angeordnet sind, dass die in der Zeichnung schematisch dargestellte stark profilierte Projektionsfläche 23 vom Stativ 1 weg und damit zum Betrachter zu zeigt. In dieser Position weist, wenn man von rechts auf die Lichtbildwand schaut (Figur 2a) eine Endkappe 24 zum Betrachter.

Wird dagegen das Gehäuse 5 mit der Lichtbildwand 6 im Gegen-Uhrzeigersinn bei Betrachtung der Figur 1 von links aus der vertikalen Ruhestellung der Figur 1 in eine horizontale Gebrauchsstellung bewegt, dann wird wiederum über das Zahnräder-Getriebe 19, 20 das erste Teil 12 der Halterung nach oben verschwenkt, so dass der Austrittsschlitz 7 des Gehäuses 5 nach oben weist. Das Gehäuse befindet sich jedoch jetzt in einer gegenüber Figur 2a unterschiedlichen, aus Figur 3a ersichtlichen Position, in welcher die in der Zeichnung als glatt dargestellte zweite Projektionsfläche 25 vom Stativ 1 weg und damit zum Besucher zeigt. Gleichzeitig sieht man, wenn man von rechts auf die Lichtbildwand blickt, ein Rändelrad 26, welches zu einer an sich bekannten Spannvorrichtung gehört.

Die Position der Zahnräder 19, 20 des die beiden Teile 12, 13 der Halterung 4 verbindenen Getriebes in den beiden Gebrauchsstellungen gemäss Figuren 2a und 3 a ist deutlich aus den Figuren 2b und 3b ersichtlich.

Die Figuren 2a und 3a lassen weiterhin erkennen, dass in den Gebrauchsstellungen jeweils das Gehäuse 5 seitlich an dem Stativ 1 anliegt, wodurch eine Weitere Bewegung des Gehäuses über die Horizontale Gebrauchsstellung hinaus verhindert und ausserdem die gesamte Anordnung stabilisiert wird.

Es sei abschliessend noch darauf hingewiesen, dass selbstverständlich die Halterung und insbesondere das Getriebe in anderer Weise gestaltet werden könnten. Ausserdem besteht bezüglich der Gestaltung der Projektionsflächen weitgehende Freiheit. Insbesondere können die Projektionsflächen prinzipiell gleich ausgebildet sein, jedoch eine unterschiedliche, dunkle Berandung tragen, die dazu dient, die unscharfen Bildränder eines projizierten Bildes abzudecken.

**Ansprüche**

1. Lichtbildwand mit einem Stativ und einem über eine eine Verdrehung des Gehäuses zwischen einer horizontalen Gebrauchsstellung und einer zum Stativ parallelen, vertikalen Ruhestellung gestattenden Halterung mit dem Stativ verbundenen, die aufgerollte Lichtbildwand aufnehmenden Gehäuse, das mit einem in Gebrauchsstellung an der Oberseite des Gehäuses befindlichen Austrittschlitz für die Lichtbildwand versehen ist, welche auf unterchiedlichen Seiten unterschiedliche Projektionsflächen aufweist, wobei die Halterung derart ausgebildet ist, dass das Gehäuse in zwei unterschiedliche horizontale Gebrauchsstellungen bringbar ist, in deren jeder der Austrittschlitz oberseitig am Gehäuse angeordnet und die Lichtbildwand abhängig von der Gebrauchsstellung jeweils mit einer entsprechenden der Projektionsflächen vom Stativ weg weisend aus dem Gehäuse herausziehbar ist, dadurch gekennzeichnet, dass die Halterung (4) aus zwei mittels eines eine Schwenkbewegung um eine zur Längsachse des Gehäuses (5) parallele Schwenkachse (15) gestattenden Geblenkes verbundenen Teilen (12, 13) besteht, deren erstes Teil (12) mit dem Gehäuse an dessen dem Austrittsschlitz (7) gegenüberliegender Seite (11) fest verbunden ist und deren zweites Teil (13) um eine quer zur Schwenkachse (15) liegende Horizontalachse (9) verdrehbar an dem Stativ (1) gelagert ist, dass der Austrittsschlitz (7) des Gehäuses (5) in dessen vertikaler Ruhestellung etwa in einer Vertikalebene mit der Längsachse des Gehäuses (5) und des Statives (1), diesem diametral gegenüberliegend, angeordnet ist, und dass die beiden Teile (12, 13) der Halterung (4) über ein bei Drehung des Gehäuses (5) aus der vertikalen Ruhestellung (Figur 1) in eine der beiden horizontalen Gebrauchsstellungen (Figuren 2, 3) zwangsweise eine Schwenkbewegung des ersten Teils (12) in eine Position, in der der Austrittsschlitz (7) des Gehäuses (5) nach oben weist, bewirkendes Getriebe (19, 20) bewegungsmässig miteinander gekoppelt sind.

2. Lichtbildwand nach Anspruch 1, dadurch gekennzeichnet, dass das Getriebe von zwei miteinander kämmenden Zahnrädern (19, 20) gebildet ist, von denen das erste Zahnrad (19) koaxial zur Schwenkachse (15) des Gelenkes mit dem ersten Teil (12) drehfest verbunden ist, während das zweite Zahnrad (20) koaxial zur Horizontalachse (9) angeordnet und gegenüber dem Stativ (1) undrehbar befestigt ist, wobei jedoch eine Drehung des zweiten Teils (13) gegenüber dem zweiten Zahnrad (20) möglich ist.

3. Lichtbildwand nach Anspruch 1 und 2, dadurch gekennzeichnet, dass die Zahnräder (19, 20) des Getriebes als Kegel-Zahnräder ausgebildet sind.

4. Lichtbildwand nach Anspruch 2 oder 3, dadurch gekennzeichnet, dass die Lagerachse (15) für das erste Zahnrad (19) als Gelenkachse zur schwenkbaren Verbindung der beiden Teile (12, 13) der Halterung (4) ausgebildet ist und die Lagerachse (22) für das zweite Zahnrad (20) gleichzeitig die Horizontalachse (9) zur drehbaren Lagerung des zweiten Teils (13) der Halterung (4) am Stativ (1) bildet.

5. Lichtbildwand nach einem der vorhergehenden Ansprüche, dadurch gekennzeichnet, dass die beiden Teile (12, 13) der Halterung (4) jeweils im wesentlichen U-förmig ausgebildet, im Bereich der freien Enden ihrer U-Schenkel (16) mittels des Gelenkes um die zu den U-Stegen (14, 17) parallele Schwenkachse (15) schwenkbar miteinander verbunden und über ihre U-Stege (14, 17) an dem Gehäuse (5) bzw. dem Stativ (1) festgelegt sind.

6. Lichtbildwand nach einem der vorhergehenden Ansprüche, dadurch gekennzeichnet, dass das Gehäuse (5) in jeder Gebrauchsstellung (Figuren 2, 3) seitlich an dem Stativ (1) oberhalb der Halterung (4) anliegt.

7. Lichtbildwand nach einem der vorhergehenden Ansprüche, dadurch gekennzeichnet, dass das zweite Teil (13) der Halterung (4) und gegebenenfalls das zweite Zahnrad (20) an einem Griff (2) befestigt sind, welcher in an sich bekannter Weise entlang des Statives (1) verschieblich ist.

8. Lichtbildwand nach einem der vorhergehenden Ansprüche, dadurch gekennzeichnet, dass die beiden Projektionsflächen (23, 25) mit dunklen Berandungen jeweils unterschiedlichen Formates versehen sind.

## Claims

1. Photographic projection-screen having a stand and a housing which receives the rolled-up projection-screen and is attached to the stand via a holding mechanism which allows the housing to be rotated between a horizontal operating position and a vertical inoperative position, parallel to the stand, the said housing being provided with an exit slot for the projection-screen, this slot being located on the upper side of the housing when in the operating position, the projection-screen having different projection-surfaces on different sides and the holding mechanism being designed in such a manner that the housing can be brought into two different horizontal operating positions, in each of which the exit slot is located on the upper side of the housing and the projection-screen can be pulled out of the housing, depending on the operating position, with a corresponding projection-surface, of the two such surfaces, in each case pointing away from the housing, characterised in that the holding mechanism (4) comprises two parts (12, 13) which are connected by means of a joint allowing a pivoting movement about a pivot shaft (15) which is parallel to the longitudinal axis of the housing (5), the first part (12) of the said two parts being rigidly attached to the housing at the side of the housing located opposite the exit slot (7), and the second part (13) of the said two parts being mounted on the stand (1) so that it can be rotated about a horizontal axis (9) located transversely to the pivot shaft (15), in that the exit slot (7) of the housing (5) is located, when the latter is in its vertical, inoperative position, approximately in a vertical plane with the longitudinal axis of the housing (5) and of the stand (1), the housing being diametrically opposite the stand, and in that the two parts (12, 13) of the holding mechanism (4) are coupled to one another, with respect to their movements, via a gear mechanism (19, 20) which constrains the first part (12) to pivot into a position in which the exit slot (7) of the housing (5) points upwards on rotating the latter out of the vertical, inoperative position (Figure 1), into one of the two horizontal operating positions (Figures 2, 3).

2. Projection-screen according to Claim 1, characterised in that the gear mechanism is formed by two gear whelles (19, 20), which mesh with each other, and of which the first gear wheel (19) is attached to the first part (12), in a manner preventing rotation, coaxially with the pivot shaft (15) of the joint, whilst the second gear wheel (20) is located coaxially with the horizontal axis (9) and is secured so that it cannot turn with respect to the stand (1), it being possible, however, for the second part (13) to rotate with respect to the second gear wheel (20).

3. Projection-screen according to Claims 1 and 2, characterised in that the gear wheels (19, 20) of the gear mechanism are designed as bevel gear wheels.

4. Projection-screen according to Claim 2 or 3, characterised in that the bearing-shaft (15) for the first gear wheel (19) is designed as a joint-pin for the pivotable connection of the two parts (12, 13) of the holding mechanism (4), and the bearing-shaft (22) for the second gear wheel (20) simultaneously forms the horizontal axis (9) for the purpose of rotatably mounting the second part (13) of the holding mechanism (4) on the stand (1).

5. Projection-screen according to one of the preceding Claims, characterised in that the two parts (12, 13) of the holding mechanism (4) are in each case, essentially of U-shaped design, are connected to one another, in the region of the free ends of their U-limbs (16), by means of the joint, so that they can pivot about the pivot shaft (15) which is parallel to the U-webs (14, 17), and are respectively fixed to the housing (5) and to the stand (1), via their U-webs (14, 17).

6. Projection-screen according to one of the preceding Claims, characterised in that the housing (5) rests laterally against the stand (1), above the holding mechanism (4), in each operating position (Figures 2, 3).

7. Projection-screen according to one of the preceding Claims, characterised in that the second part (13) of the holding mechanism (4) and, if appropriate, the second gear wheel (20) are secured to a handle (2), which can be pushed along the stand (1) in a manner known per se.

8. Projection-screen according to one of the preceding Claims, characterised in that the two projection-surfaces (23, 25) are provided with dark edgings having a different format in each case.

**Revendications**

1. Ecran de projection comprenant un support et un corps recevant l'écran de projection enroulé, relié au support par l'intermédiaire d'un organe de soutien permettant une rotation du corps entre une position d'utilisation horizontale et une position de repos verticale, parallèle au support, le corps étant muni d'une fente de sortie se trouvant, dans la position d'utilisation, sur la face supérieure du corps et destinée à l'écran de projection qui présente des surfaces de projection différentes sur les différentes faces, l'organe de soutien étant conçu de telle sorte que le corps puisse être amené dans deux positions d'utilisation horizontales différentes, dans chacune desquelles la fente de sortie est disposée dans le haut sur le corps et l'écran de projection peut être extrait, en fonction de la position d'utilisation, chaque fois avec une surface de projection correspondante, à partir du corps en s'écartant du support, caractérisé en ce que l'organe de soutien (4) se compose de deux pièces (12, 13) reliées au moyen d'une articulation permettant un pivotement sur un axe pivotant (15) parallèle à l'axe longitudinal du corps (5), la première pièce (12) étant reliée fermement au corps sur son côté (11) opposé à la fente de sortie (7) et la deuxième pièce (13) étant montée sur le support (1) pour tourner sur un axe horizontal (9) se situant transversalement à l'axe de pivotement (15) ; en ce que la fente de sortie (7) du corps (5) est disposée, dans la position de repos verticale de ce dernier, approximativement dans un plan vertical avec l'axe longitudinal ; du corps (5) et du support (1), tout en étant opposée diamétralement à celui-ci ; et en ce que les deux pièces (12, 13) de l'organe de soutien (4) sont accouplées l'une à l'autre en vue d'un mouvement, par l'intermédiaire d'un engrenage (19, 20) provoquant, par voie de contrainte, lors de la rotation du corps (5) de la position de repos verticale (figure 1) à l'une des deux positions d'utilisation horizontales (figures 2 et 3), un pivotement de la première pièce (12) dans une position où la fente de sortie (7) du corps (5) est dirigée vers le haut.

2. Ecran de projection selon la revendication 1, caractérisé en ce que l'engrenage est formé de deux roues dentées (19, 20) s'engrenant l'une l'autre et parmi lesquelles la première roue dentée (19) est reliée fixement à la première pièce (12) coaxialement à l'axe de pivotement (15) de l'articulation, tandis que la deuxième roue dentée (20) est disposée coaxialement à l'axe horizontal (9) et est fixée à l'état non rotatif par rapport au support (1), une rotation de la deuxième pièce (13) étant toutefois possible par rapport à la deuxième roue dentée (20).

3. Ecran de projection selon l'une quelconque des revendications 1 et 2, caractérisé en ce que les roues dentées (19, 20) de l'engrenage sont conçues comme des roues dentées coniques.

4. Ecran de projection selon l'une quelconque des revendications 2 et 3, caractérisé en ce que l'axe de palier (15) de la première roue dentée (19) est conçu comme un axe d'articulation pour le raccordement pivotant des deux pièces (12, 13) de l'organe de soutien (4) et en ce que l'axe de palier (22) de la deuxième roue dentée (20) forme simultanément l'axe horizontal (9) pour le logement rotatif de la deuxième pièce (13) de l'organe de soutien (4) sur le support (1).

5. Ecran de projection selon l'une quelconque des revendications 1 à 4, caractérisé en ce que les deux pièces (12, 13) de l'organe de soutien (4) sont conçues chacune en substance en U, sont reliées, dans la zone des extrémités libres des branches (16) du U, de façon à pivoter au moyen de l'articulation sur l'axe de pivotement (15) parallèle aux dos (14, 17) du U et sont fixées par les dos (14, 17) du U sur le corps (5) ou le support (1).

6. Ecran de projection selon l'une quelconque des revendications 1 à 5, caractérisé en ce que le corps (5) s'applique, dans chaque position d'utilisation (figures 2 et 3) latéralement sur le support (1) au-dessus de l'organe de soutien (4).

7. Ecran de projection selon l'une quelconque des revendications 1 à 6, caractérisé en ce que la deuxième pièce (13) de l'organe de soutien (4) et éventuellement la deuxième roue dentée (20) sont fixées sur une poignée (2) qui est déplaçable le long du support (1) d'une manière connue en soi.

8. Ecran de projection selon l'une quelconque des revendications 1 à 7, caractérisé en ce que les deux surfaces de projection (23, 25) sont munies de bordures foncées chacune d'un format différent.

Fig. 1

Fig. 2a

Fig. 2b

Fig. 3a

Fig. 3b